# FASCICULE DE BREVET EUROPEEN

(11) **EP 1 033 801 B1**
(45) Date de publication et mention de la délivrance du brevet: **18.08.2004**
(21) Numéro de dépôt: 00400554.2
(22) Date de dépôt: 01.03.2000
(51) Int. Cl.: H02G 3/08, H02G 3/06

(54) **Dispositif de traversée étanché**
Abgedichtete Durchführungsvorrichtung
Sealed feedthrough device

(30) Priorité: 02.03.1999 FR 9902552
(43) Date de publication de la demande: 06.09.2000
(73) Titulaire: CONNECTEURS ELECTRIQUES DEUTSCH, 27000 Evreux Cédex 09 (FR)
(72) Inventeur: Moreau, Jean-Luc, 28200 Chateaudun (FR)
(74) Mandataire: Laget, Jean-Loup

(56) Documents cités:
- DE-A- 4 300 521
- DE-U- 29 715 811
- FR-A- 2 694 655

## Description

La présente invention concerne, d'une manière générale, un dispositif d'étanchéité pour établir une étanchéité entre une cloison et au moins un câble ou canalisation passant au travers d'un trou de ladite cloison. L'invention concerne plus particulièrement un dispositif d'étanchéité du type comprenant deux demi-coquilles aptes à être placées sur le câble ou canalisation et assemblées l'une à l'autre pour former ensemble un corps cylindrique qui entoure complètement ledit câble ou canalisation et peut être fixé à ladite cloison en correspondance avec le trou de celle-ci, un joint d'étanchéité destiné à être placé entre le dit corps cylindrique et ladite cloison, et des moyens de scellement pour remplir le vide entre ledit câble ou canalisation et ledit corps cylindrique et pour immobiliser ceux-ci l'un par rapport à l'autre. (voir DE-A1-4 300 521).

On connaît déjà un dispositif d'étanchéité du genre défini ci-dessus, destiné à établir une étanchéité entre une cloison et un faisceau de câbles passant à travers un trou de ladite cloison. En service, pour établir l'étanchéité avec ce dispositif connu d'étanchéité, les deux demi-coquilles sont placées autour du faisceau de câbles et solidarisées l'une à l'autre par des rubans adhésifs. Ensuite, deux coupelles coniques, fendues longitudinalement sur un côté et faites d'une matière souple, sont placées autour du faisceau, chacune d'un côté du corps cylindrique formé par les deux demi-coquilles, de manière à en recouvrir les extrémités ouvertes. Une fois mises en place, chaque coupelle conique est maintenue fermée et assemblée au corps cylindrique également par du ruban adhésif. On obtient ainsi un "moule" dans lequel peut être injecté un produit de remplissage qui polymérise en température et qui sert de moyens de scellement pour remplir le vide entre le faisceau de câbles et le corps cylindrique. Au moins un orifice d'injection est prévu dans au moins une des demi-coquilles du corps cylindrique pour l'injection du produit de remplissage. Après polymérisation et séchage, les deux coupelles coniques sont enlevées.

Ce dispositif d'étanchéité connu présente un certain nombre d'inconvénients. La qualité de l'étanchéité obtenue est aléatoire. Elle dépend en effet grandement du soin apporté au remplissage du "moule" et au bon vouloir" du produit de remplissage à combler les vides entre les divers câbles du faisceau de câbles. En outre, la mise en oeuvre du dispositif d'étanchéité est relativement longue, notamment à cause du temps nécessaire à la polymérisation du produit de remplissage. De plus, le produit de remplissage est généralement toxique et nécessite des précautions lors de son emploi. Enfin, le dispositif d'étanchéité n'est pas réparable en cas de défaut d'étanchéité.

La présente invention a donc pour but de fournir un dispositif d'étanchéité du genre sus-indiqué, dont la mise en oeuvre soit plus aisée et plus rapide que celle du dispositif d'étanchéité connu, tout en procurant une bonne étanchéité, sans utilisation d'un produit de remplissage toxique, et qui permette des réparations en cas de besoin.

A cet effet, le dispositif d'étanchéité selon l'invention est caractérisé en ce que les moyens de scellement comprennent :
a) au moins une garniture d'étanchéité en une matière élastomère capable de fluer, et destinée à être placée autour dudit câble ou canalisation ;
b) un dispositif de serrage radial, sous la forme d'un anneau fendu élastiquement déformable, qui est dimensionné pour pouvoir être adapté autour de ladite garniture d'étanchéité et engagé dans ledit corps cylindrique, et qui comporte une jupe structurée ou configurée pour être rétractable radialement de façon au moins sensiblement uniforme sur toute sa circonférence sous l'action d'une force axiale de serrage ; et
c) un dispositif de serrage axial qui interagit avec ledit corps cylindrique et ladite jupe pour obliger celle-ci à se rétracter afin de comprimer et faire fluer ladite garniture d'étanchéité pour combler ledit vide entre câble ou canalisation et corps cylindrique.

De préférence, le dispositif d'étanchéité selon l'invention peut aussi présenter les caractéristiques suivantes :
- la jupe radialement rétractable du dispositif de serrage radial est définie par une série circulaire de doigts flexibles, qui sont formés d'un seul tenant avec ledit anneau fendu et s'étendent à partir d'une face de celui-ci dans une direction sensiblement parallèle à l'axe dudit anneau fendu ;
- les doigts flexibles ont leurs faces latérales, deux à deux mutuellement en regard, qui sont inclinées de façon à se chevaucher dans le sens circonférentiel de l'anneau fendu;
- le corps cylindrique est pourvu d'un filetage à une de ses extrémités et, dans une région située à distance dudit filetage, d'un épaulement annulaire interne servant d'appui axial pour l'anneau fendu dudit dispositif de serrage radial ;
- le dispositif de serrage axial comporte au moins deux pièces assemblables entre elles, qui définissent, après leur assemblage une surface conique et un élément fileté apte à coopérer avec le filetage dudit corps cylindrique pour presser axialement ladite surface conique contre les extrémités libres des doigts flexibles dudit dispositif de serrage radial, afin d'obliger lesdites extrémités libres des doigts flexibles à se rétracter radialement ;
- le filetage dudit corps cylindrique est un filetage femelle et ledit dispositif de serrage axial comporte trois pièces, à savoir une bague fendue en une matière élastiquement déformable, qui peut glisser axialement dans ledit corps cylindrique et dont le trou central présente, en tant que surface conique, un chanfrein conique tourné vers les doigts flexibles dudit dispositif de serrage radial, et deux demi-écrous assemblables l'un à l'autre pour former ensemble un manchon -écrou fileté extérieurement, qui entoure ledit câble ou canalisation, est vissé dans le filetage femelle dudit corps cylindrique et pousse axialement ladite bague fendue et son chanfrein conique contre les extrémités libres des doigts flexibles dudit dispositif de serrage radial pour les obliger à se rétracter radialement ;
- la bague fendue comporte, dans sa région diamétralement opposée à sa fente, une rainure qui est parallèle à ladite fente et qui définit dans ladite région une zone de moindre épaisseur de paroi facilitant une déformation élastique de ladite bague fendue pour sa mise en place autour dudit câble ou canalisation ;
- les deux demi-écrous s'assemblent l'un à l'autre par des surfaces mutuellement en contact, qui présentent respectivement des éléments mâles et femelles de positionnement emboîtables les uns dans les autres et des moyens de retenue par clipsage ;
- ledit manchon-écrou comporte sur sa surface périphérique une marque qui est indicative d'un serrage insuffisant dudit manchon-écrou lorsque celui-ci est vissé dans le filetage femelle dudit corps cylindrique et que ladite marque est encore visible ;
- la marque est constituée par un anneau coloré qui a une couleur différente de celle du restant du manchon-écrou ;
- le manchon-écrou et ledit corps cylindrique comprennent, à titre de moyens anti-dévissage, au moins une protubérance et au moins un évidement qui s'engagent l'un dans l'autre lorsque ledit manchon-écrou a atteint un degré de vissage prédéfini ;
- le corps cylindrique et l'anneau fendu du dispositif de serrage radial comportent au moins une protubérance et au moins un évidement s'engageant l'un dans l'autre à titre de dispositif anti-rotation ;
- les deux demi-coquilles formant ledit corps cylindrique s'assemblent l'une à l'autre par des surfaces mutuellement en contact qui présentent des éléments mâles et femelles de positionnement, et sont maintenues assemblées l'une à l'autre par des ensembles boulon-écrou ;
- les boulons et les écrous des ensembles boulon-écrou sont logés dans des évidements respectifs ménagés dans les deux demi-coquilles et y sont maintenus par des éléments de retenue qui sont formés dans lesdits évidements, d'un seul tenant avec les demi-coquilles ;
- en tant que garniture d'étanchéité, il est prévu un manchon en matière élastomère qui est fendu longitudinalement et qui garnit la surface intérieure de l'anneau fendu dudit dispositif de serrage radial, y compris ses doigts flexibles, ledit manchon en élastomère comportant, à une de ses extrémités, une collerette qui recouvre la face dudit anneau fendu orientée vers l'épaulement annulaire interne dudit corps cylindrique et une partie adjacente de la surface périphérique externe dudit anneau fendu ;
- en tant que garniture d'étanchéité, il est prévu en plus dudit manchon en matière élastomère, au moins une paire de rubans en matière élastomère qui sont placés en sandwich et pressés de chaque côté d'une nappe composée d'au moins une partie desdits câbles formant ledit faisceau.
- dans le cas d'une nappe unique formée de tous les câbles dudit faisceau, le sandwich composé de ladite nappe et des deux rubans en matière élastomère est enroulé sur lui-même de manière à former un rouleau dont l'axe est parallèle à l'axe longitudinal des câbles, et un ruban additionnel en matière élastomère est enroulé sur au moins un tour autour dudit rouleau ;
- dans le cas de plusieurs nappes formées chacune d'un certain nombre de câbles du faisceau et prises chacune en sandwich entre une paire respective de rubans en matière élastomère, lesdites nappes garnies de leurs rubans en matière élastomère sont superposées les unes aux autres, et un ruban additionnel en matière élastomère est enroulé sur au moins un tour autour de l'ensemble formé par les nappes superposées ;
- chacune des deux demi-coquilles formant ledit corps cylindrique est pourvue d'une demi-bride qui, après assemblage des deux demi-coquilles, forme avec la demi-bride de l'autre demi-coquille une bride pour la fixation dudit corps cylindrique à ladite cloison ;
- les deux demi-brides et l'épaulement annulaire dudit corps cylindrique sont coplanaires ;
- le joint d'étanchéité est constitué par deux demi-joints en matière élastomère associés chacun à la demi-bridé d'une demi-coquille correspondante, chaque demi-joint comprenant une partie sensiblement plane, en forme d'arche, qui est destinée à être appliquée contre la face, coté cloison, de la demi-bride de la demi-coquille correspondante, et deux parties situées respectivement aux pieds de la partie en forme d'arche et destinées à être intercalées entre les deux demi-brides et entre des parties correspondantes des demi-coquilles formant ensemble ledit épaulement annulaire du corps cylindrique ;
- la partie sensiblement plane de chaque demi-joint est fixée à la demi-bride de la demi-coquille correspondante par boutonnage ;
- au moins l'une des deux demi-coquilles dudit corps cylindrique comporte, dans l'épaisseur de sa paroi, au moins un canal longitudinal, dont une des extrémités débouche à l'extérieur dudit corps cylindrique du côté de son extrémité filetée et est obturée de façon étanche par un passe-câbles en matière élastomère, et dont l'autre extrémité débouche dans l'espace interne dudit corps cylindrique au-delà de son épaulement annulaire ;
- le corps est, au moins superficiellement, conducteur de l'électricité et présente, à chacune de ses extrémités, une gorge circulaire pour la fixation d'une extrémité d'une tresse métallique de blindage de câble ou de faisceau de câbles à l'aide d'un collier de serrage.

D'autres caractéristiques de la présente invention apparaîtront au cours de la description suivante d'un mode de réalisation de l'invention donné à titre d'exemple en référence aux dessins annexés sur lesquels :
- la figure 1 est une vue en perspective du dispositif d'étanchéité selon l'invention vu de trois-quarts avant ;
- la figure 2 est une vue en perspective du dispositif d'étanchéité vu de trois-quarts arrière et en coupe par un plan axial perpendiculaire au plan de joint des deux demi-coquilles du corps cylindrique du dispositif d'étanchéité ;
- la figure 3 est une vue en perspective du dispositif d'étanchéité vu dans une direction un peu différente de celle de la figure 1 et en coupe par un plan perpendiculaire à l'axe du corps cylindrique du dispositif d'étanchéité ;
- la figure 4 est une vue en perspective de l'intérieur de l'une des deux demi-coquilles du corps cylindrique du dispositif d'étanchéité ;
- la figure 5 est une vue en perspective de l'intérieur de l'autre demi-coquille dudit dispositif d'étanchéité ;
- la figure 6 est une vue en perspective des deux demi-coquilles assemblées l'une à l'autre ;
- la figure 7 est une vue en perspective de l'une des deux parties d'un joint d'étanchéité en deux parties, destiné à être utilisé avec le dispositif d'étanchéité selon l'invention ;
- la figure 8 est une vue en perspective d'un passe-fil destiné à être utilisé avec le dispositif d'étanchéité selon l'invention ;
- la figure 9 est une vue en perspective d'un dispositif de serrage radial, qui fait partie du dispositif d'étanchéité selon l'invention ;
- la figure 10 est une vue en perspective d'une garniture d'étanchéité utilisable avec le dispositif de serrage radial de la figure 9 ;
- la figure 11 est une vue en perspective éclatée d'un écrou en deux parties (demi-écrous) utilisable comme dispositif de serrage axial dans le dispositif d'étanchéité selon l'invention ;
- la figure 12 est une vue en perspective montrant, sous un autre angle de vue, l'un des deux demi-écrous de la figure 11 ;
- la figure 13 est une vue en perspective d'une bague fendue, constituant un autre élément du dispositif d'étanchéité selon l'invention ;
- la figure 14 est une vue en perspective montrant un dispositif pour la préparation d'un faisceau de câbles sous la forme d'une nappe de câbles ;
- la figure 15 est une vue en perspective montrant, à plus grande échelle, une nappe de câbles obtenue à l'aide du dispositif de la figure 14 ;
- la figure 16 montre la nappe de câbles de la figure 15, roulée sur elle-même et entourée d'un ruban de matière élastomère, avant sa mise en place dans le dispositif d'étanchéité selon l'invention ;
- la figure 17 est une vue semblable à la figure 16, montrant le faisceau de câbles après qu'il a été compressé radialement dans le dispositif d'étanchéité selon l'invention ;
- la figure 18 est une vue en perspective montrant une autre manière de préparer un faisceau de câbles comportant un grand nombre de câbles, avant que ledit faisceau soit placé dans le dispositif d'étanchéité selon l'invention.

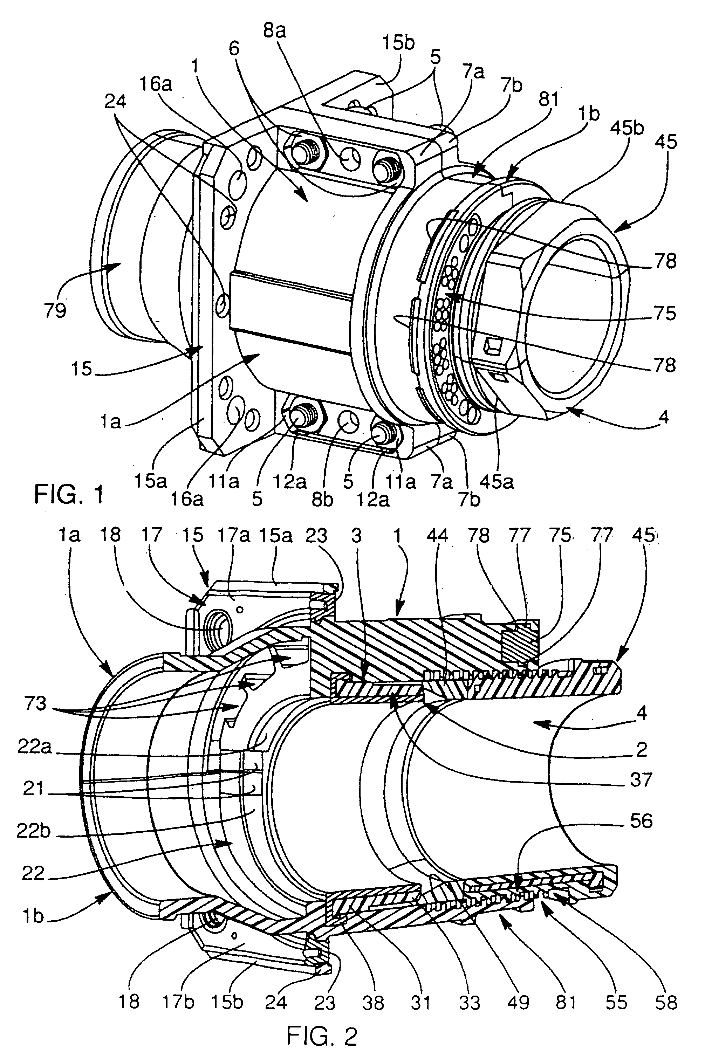

Le dispositif d'étanchéité représenté sur la figure 1 comprend essentiellement un corps 1, en gros cylindrique, composé de deux demi-coquilles 1a et 1b, au moins une garniture d'étanchéité 2 (non montrée dans la figure 1, mais visible dans les figures 2, 3 et 10), un dispositif de serrage radial 3 (également non montré dans la figure 1, mais visible dans les figures 2, 3 et 9) et un dispositif de serrage axial 4 (seulement en partie visible dans la figure 1 et complètement visible dans la figure 2).

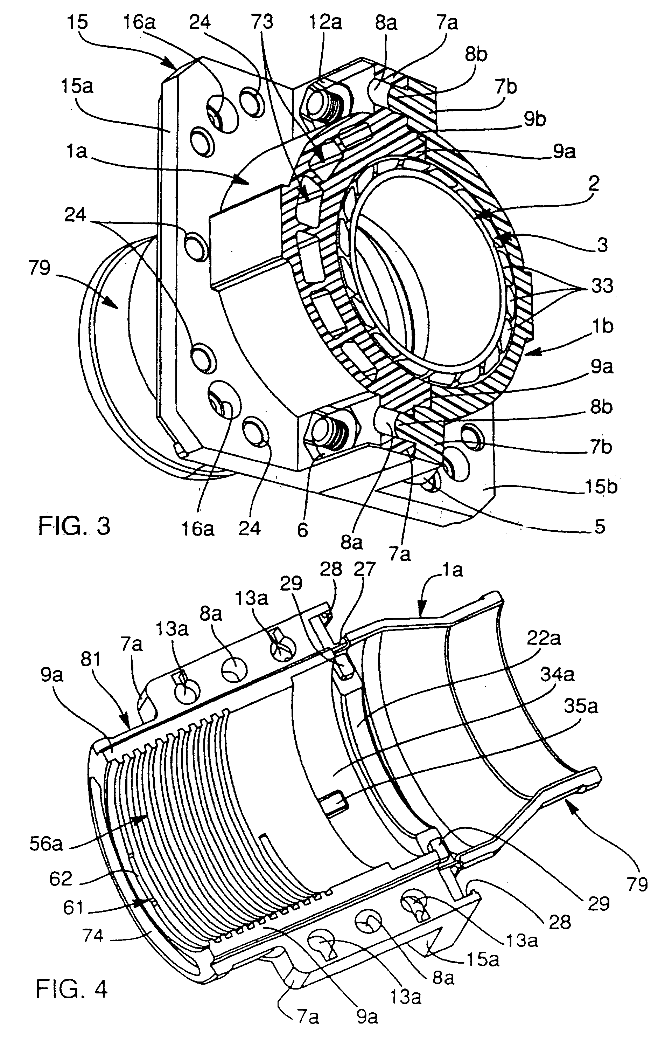

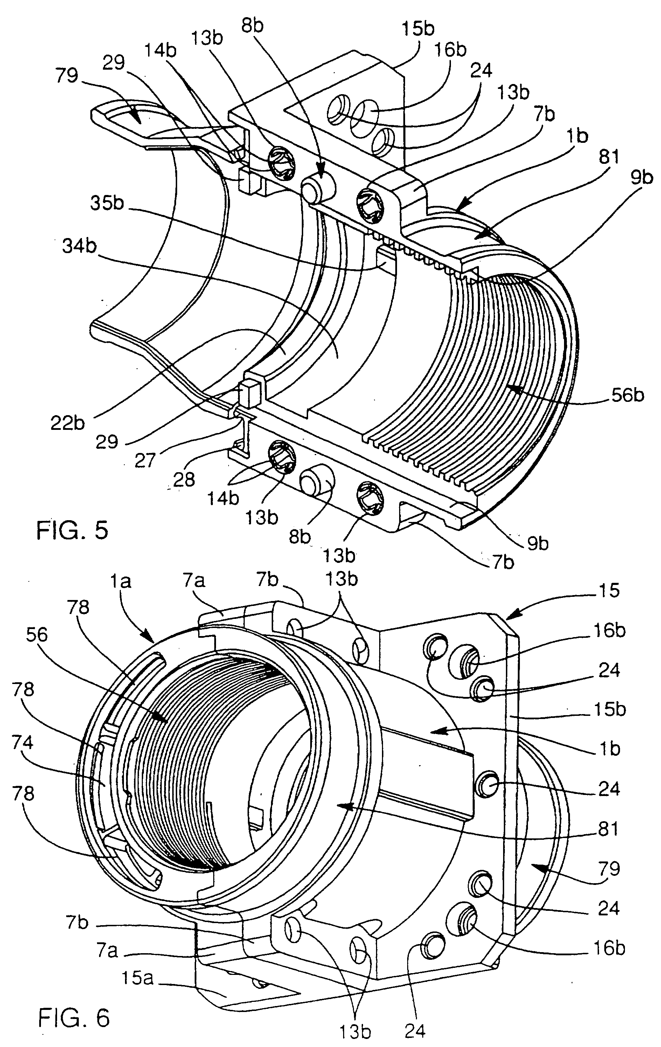

Les deux demi-coquilles 1a et 1b ont des surfaces mutuellement en contact qui présentent des éléments mâles et femelles pouvant s'emboîter les uns dans les autres et elles sont maintenues assemblées l'une à l'autre par plusieurs ensembles boulon 5 et écrou 6, par exemple quatre ensembles boulon-écrou comme montré dans les figures 1 et 3. Plus précisément, chacune des deux demi-coquilles 1a, 1b comporte deux brides d'assemblage 7a, 7b qui s'étendent le long de leurs bords longitudinaux, sur une partie de la longueur de ceux-ci, dans une région médiane du corps cylindrique 1. Chacune des deux brides d'assemblage 7b de la demi-coquille 1b présente, sur sa face orientée vers la bride 7a correspondante de l'autre demi-coquille 1a, un pion de positionnement 8b (figure 5) pouvant être emboîté à frottement doux dans un trou lisse 8a (figures 3 et 4) de la bride 7a correspondante. Afin d'améliorer encore le positionnement des deux demi-coquilles 1a et 1b, l'une par rapport à l'autre, la demi-coquille la présente sur chacun de ses deux bords longitudinaux une nervure longitudinale 9a qui, lorsqu'on assemble les deux demi-coquilles 1a et 1b, s'engage dans une feuillure longitudinale 9b prévue dans chacun des deux bords longitudinaux de la demi-coquille 1b.

Comme montré dans les figures 1 et 3, chacune des deux brides 7a de la demi-coquille 1a présente, dans sa face externe (celle qui est la plus éloignée de la bride 7b correspondante), un évidement peu profond de forme allongée, dans le fond duquel sont formés deux logements 11a, plus profond et de forme hexagonale, aptes à recevoir chacun, pratiquement sans jeu, l'écrou 6 de l'un des ensembles boulon-écrou susmentionnés. Ainsi, les écrous 6 ne peuvent pas tourner dans leurs logements respectifs 11a lorsque les boulons 5 sont vissés. Afin de rendre les écrous 6 imperdables, chaque écrou 6 est maintenu dans son logement respectif 11a par un élément de retenue 12a qui est formé d'un seul tenant avec la demi-coquille la. De préférence, chaque élément de retenue 12a se présente sous la forme d'une rampe ou d'une dent de scie et est formé sur une paroi mince, élastiquement déformable, de l'évidement peu profond susmentionné. Le fond de chaque logement 11a est percé d'un trou 13a (figure 4) qui est aligné avec un trou correspond 13b de l'une des deux brides 7b, chacune des deux brides 7b comportant donc deux trous 13b. Chaque paire de trous alignés 13a et 13b reçoit la tige filetée du boulon 5 de l'un des ensembles boulon-écrou susmentionnés. Afin de rendre les boulons 5 imperdables, la demi-coquille 1b peut avantageusement comporter, dans chaque trou 13b, plusieurs doigts, par exemple 4 doigts 14b (figure 5) qui sont formés d'un seul tenant avec la demi-coquille 1b, sont déformables élastiquement et s'engagent dans une gorge (non montrée) du boulon 5 engagé dans le trou 13b correspondant.

Les deux demi-coquilles 1a et 1b formant le corps cylindrique 1 sont en outre pourvues de demi-brides 15a et 15b respectivement qui, après assemblage des deux demi-coquilles, forment ensemble une bride 15 permettant la fixation du corps cylindrique à une cloison (non montrée) percée d'un trou à travers lequel on désire faire passer, de manière étanche, un câble, une canalisation, un faisceau de câbles ou un faisceau de canalisations (non montré dans les figures 1 à 6). Chaque demi-bride 15a, 15b comporte deux trous de vis 16a ou 16b pour des vis de fixation ou des boulons appropriés servant à la fixation du dispositif d'étanchéité selon l'invention sur ladite cloison. La face de la bride de fixation 15 qui est orientée vers la cloison porte un joint d'étanchéité 17 (figure 2). Le joint d'étanchéité 17 comporte des trous 18 en correspondance avec les trous 16a, 16b des demi-brides 15a, 15b.

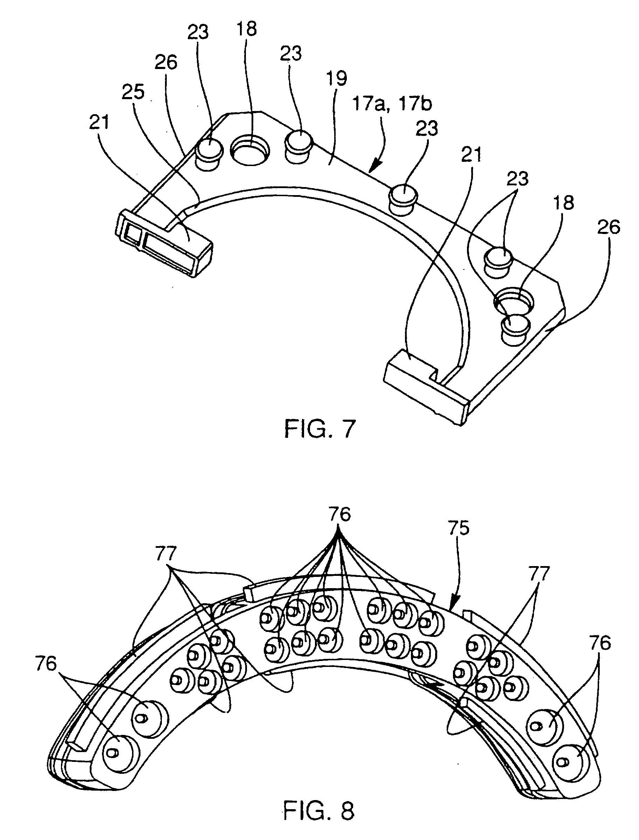

En réalité, le joint d'étanchéité 17 est constitué par deux demi-joints 17a et 17b, en une matière élastomère, associés chacun à là demi-bride 15a ou 15b de là demi-coquille 1a ou 1b correspondante. Les deux demi-joints 17a et 17b sont identiques et ont une structure telle que celle qui est montrée dans la figure 7. Plus précisément, chaque demi-joint 17a, 17b comprend une partie 19, sensiblement plane, en forme d'arche, qui est destinée à être appliquée contre la face, côté cloison, de la demi-bride 15a ou 15b, et deux parties 21, qui sont situées respectivement aux pieds de ladite partie 19 en forme d'arche. Lors de l'assemblage des deux demi-coquilles, les parties 21 s'intercalent entre les deux demi-brides 15a et 15b et entre des parties correspondantes 22a et 22b des demi-coquilles 1a et 1b formant ensemble un épaulement ou collet annulaire 22 (figure 2) qui fait radialement saillie à l'intérieur du corps cylindrique 1 formé par les deux demi-coquilles. La bride de fixation 15 et l'épaulement ou collet annulaire 22 se trouvent dans un même plan perpendiculaire à l'axe du corps cylindrique 1. Chacun des deux demi-joints 17a, 17b peut être fixé à la demi-bride correspondante 15a, 15b par boutonnage. A cet effet, la partie 19 de chaque demi-joint porte, sur sa face orientée vers la demi-bride correspondante, plusieurs boutons, par exemples cinq boutons 23 comme montré dans la figure 7. Les boutons 23 sont formés d'une seule pièce avec le demi-joint et, en service, ils sont engagés et clipsés dans des trous correspondants 24 de la demi-bride associée 15a ou 15b. En outre, le bord arqué 25 et les bords latéraux rectilignes 26 de la partie 19 de chaque demi-joint 17a, 17b sont engagés et tenus respectivement dans une gorge semi-circulaire 27 et des gorges rectilignes 28 (figures 4 et 5) formées dans les demi-coquilles 1a et 1b et leurs demi-brides 15a, 15b. Pour garantir un bon positionnement des parties 21 de chaque demi-joint par rapport aux parties 21 correspondantes de l'autre demi-joint et pour appliquer fermement lesdites parties 21 deux à deux l'une contre l'autre, chaque partie 21 présente un évidement (non visible dans la figure 7) dans lequel est engagé et pressé un tenon 29 formé d'un seul tenant avec la demi-coquille 1a ou 1b à chaque extrémité du demi-collet annulaire 22a ou 22b.

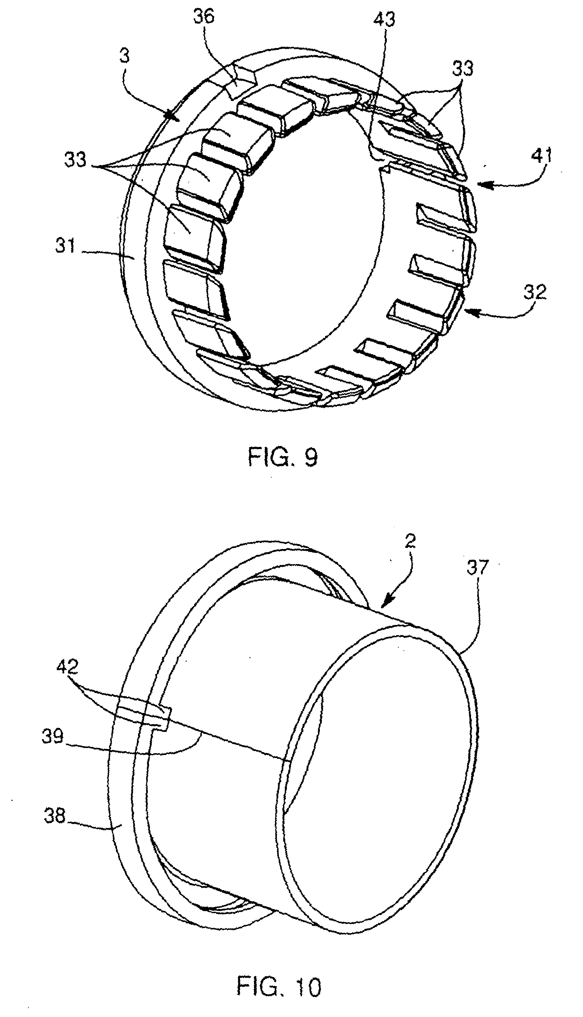

Le dispositif de serrage radial 3, qui est représenté en détail dans la figure 9, est essentiellement constitué par un anneau fendu 31 moulé en une matière plastique semi-rigide de manière à être élastiquement déformable, afin que l'anneau 31 puisse être ouvert par déformation élastique et placé autour d'un câble, d'une canalisation, d'un faisceau de câbles ou de canalisations sur lequel le dispositif d'étanchéité doit être installé. D'un côté, l'anneau fendu 31 est pourvu d'une jupe 32 pouvant être rétractée radialement de façon sensiblement uniforme sur toute sa circonférence sous l'action d'une force axiale de serrage engendrée par le dispositif de serrage axial 4 susmentionné. Comme montré dans la figure 9, la jupe 32 peut être définie par une série circulaire de doigts flexibles 33 qui sont formés d'un seul tenant avec l'anneau fendu 31 et s'étendent à partir d'une face de celui-ci dans une direction sensiblement parallèle à l'axe dudit anneau. De préférence, les doigts flexibles 33 ont des faces latérales, deux à deux mutuellement en regard, qui sont inclinées de façon à se chevaucher dans le sens circonférentiel comme cela est visible dans les figures 3 et 9. Un tel arrangement permet de faire en sorte que la pression radiale exercée par les doigts 33 sur la garniture d'étanchéité 2 sous l'action du dispositif de serrage axial 4 soit bien uniforme sur toute la circonférence de la jupe 32.

Les deux demi-coquilles 1a et 1b comportent, à proximité immédiate de leurs parties 22a et 22b formant le collet ou épaulement annulaire 22, une gorge 34a ou 34b (figures 4 et 5) destinée à recevoir l'anneau fendu 31 du dispositif de serrage radial 3 pour le positionner axialement à l'intérieur du corps cylindrique 1. En outre, au moins une des deux demi-coquilles 1a et 1b, de préférence chacune de ces deux demi-coquilles comporte, dans le fond de la gorge 34a ou 34b, une protubérance 35a ou 35b destinée à s'engager dans un évidement correspondant 36 formé dans la périphérie de l'anneau fendu 31, afin d'empêcher ce dernier de tourner lorsqu'il est en place dans les gorges 34a et 34b des deux demi-coquilles.

La garniture d'étanchéité 2 susmentionnée est représentée en détail dans la figure 10. Elle comprend un manchon cylindrique 37, en une matière élastomère capable de fluer, qui est fendu longitudinalement et qui, en service, garnit la surface intérieure de l'anneau fendu 31, y compris la jupe 32 formée par les doigts 33. A une de ses extrémités, le manchon 37 est pourvu d'une collerette 38 qui, en service, recouvre la face de l'anneau fendu 31 qui est orientée vers l'épaulement annulaire 22, ainsi qu'une partie adjacente de la surface périphérique externe de l'anneau fendu 31, comme montré dans la figure 2. Afin que la garniture d'étanchéité 2 et le dispositif de serrage radial 3 puissent être mis en place ensemble autour du câble, de la canalisation, du faisceau de câbles ou de canalisations sur lequel le dispositif d'étanchéité doit être installé, la garniture d'étanchéité 2 et le dispositif de serrage radial 3 sont préalablement assemblés l'un à l'autre de telle façon que la fente 39 du manchon 37 se trouve en correspondance avec la fente 41 de l'anneau fendu 31 et de sa jupe 32, c'est-à-dire que les fentes 39 et 41 occupent la même position angulaire sur la circonférence du manchon 37 et de l'anneau 31. Pour faciliter un tel positionnement angulaire des deux fentes 39 et 41 l'une par rapport à l'autre, le manchon 37 et sa collerette 38 comportent deux pattes radiales 42 (figure 10), qui sont situées respectivement de part et d'autre de la fente 39 et qui, en service, sont engagées dans une encoche 43 formée dans l'anneau fendu 31 dans la région de sa fente 41 (figure 9). Non seulement les deux pattes 42 facilitent le positionnement angulaire susmentionné, mais elles améliorent également l'étanchéité dans cette région de la fente 39 lorsque l'anneau fendu 31 se referme sous l'action du dispositif de serrage axial 4.

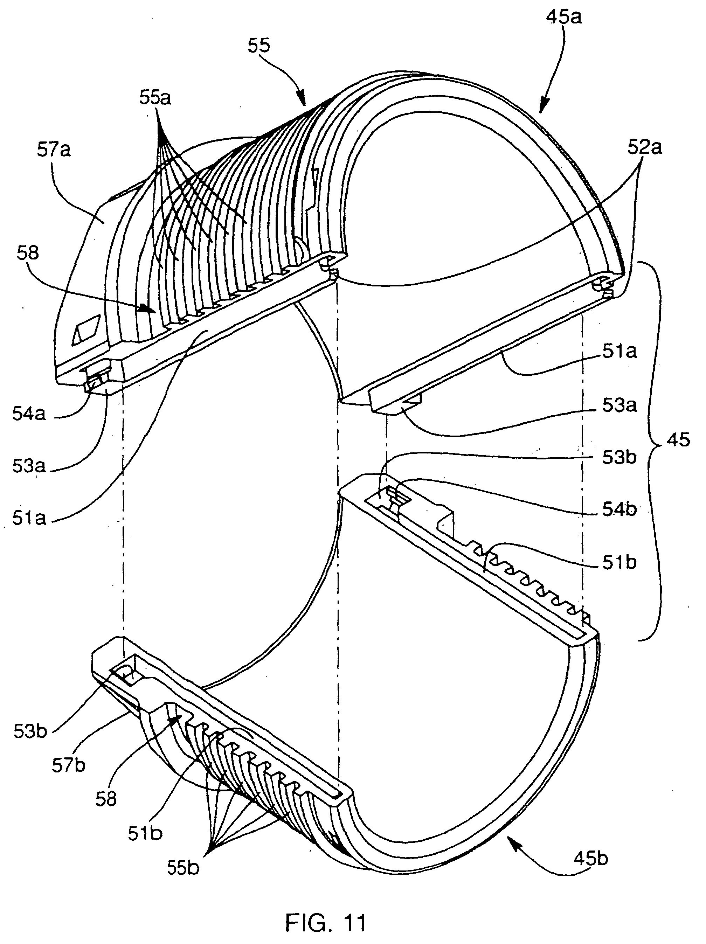

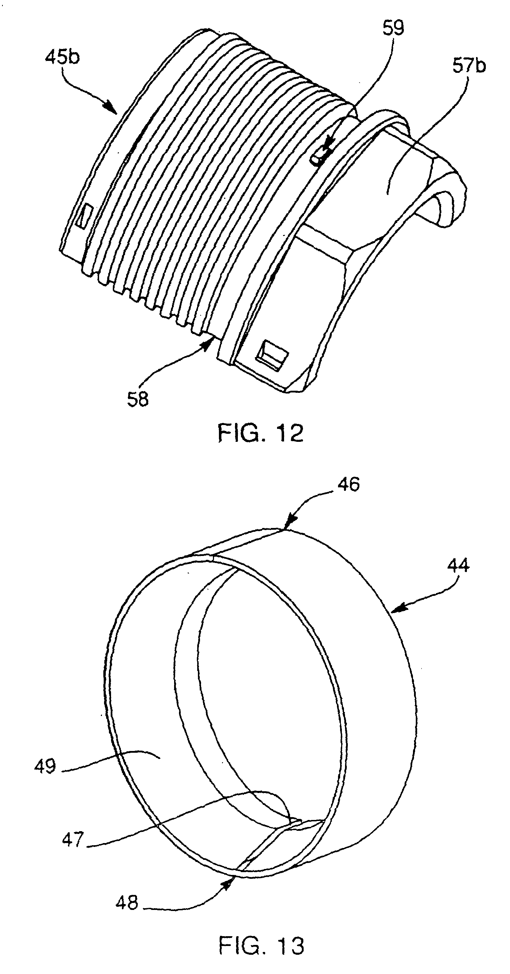

Comme montré dans la figure 2, le dispositif de serrage axial 4 comprend de préférence deux éléments, à savoir une bague fendue 44 (voir aussi la figure 13) et un manchon-écrou 45 (voir aussi les figures 11 et 12).

La bague fendue 44 est réalisée par exemple en une matière plastique élastiquement déformable, de telle façon que la bague puisse être ouverte, par déformation élastique, afin de pouvoir être placée autour d'un câble, d'une canalisation, d'un faisceau de câbles ou de canalisations sur lequel le dispositif d'étanchéité est destiné à être installé. Afin de faciliter le mouvement d'ouverture de la bague 44, celle-ci présente, dans la région diamétralement opposée à sa fente 46, une rainure intérieure 47, qui est parallèle à la fente 46 et qui définit une zone de moindre épaisseur 48, jouant le rôle d'une charnière souple. La bague 44 a une surface extérieure cylindrique dont le diamètre est choisi pour que la bague puisse glisser axialement dans le corps cylindrique 1. Le trou central de la bague 44 a une partie cylindrique, dont le diamètre correspond en gros au diamètre intérieur du manchon 37 de la garniture d'étanchéité 2, et il présente un chanfrein conique 49 à son extrémité tournée vers les extrémités libres des doigts flexibles 33 du dispositif de serrage radial 3.

Pour pouvoir être mis en place autour du câble, canalisation, faisceau de câbles ou de canalisations sur lequel le dispositif d'étanchéité doit être installé, le manchon-écrou 45 du dispositif de serrage axial 4 est lui-même composé de deux demi-écrous 45a et 45b pouvant être assemblés et fixés l'un à l'autre. Comme montré dans la figure 11, les deux demi-écrous 45a et 45b s'assemblent l'un à l'autre par des surfaces mutuellement en contact, qui présentent respectivement des nervures 51a et des rainures 51b pouvant être emboîtées les unes dans les autres pour positionner les deux demi-écrous l'un par rapport à l'autre. Les deux demi-écrous 45a et 45b peuvent être maintenus assemblés l'un à l'autre par des moyens de retenue par clipsage. A cet effet, chacune des deux nervures 5 la comporte, à l'une de ses extrémités, un doigt d'encliquetage 52a pouvant s'accrocher derrière une surface d'arrêt (non montrée) formée dans la rainure 51b correspondante à l'une des extrémités de celle-ci. A son autre extrémité, chaque nervure 51a s'élargit sous la forme d'un plot 53a à section rectangulaire pouvant s'emboîter dans un évidement 53b de forme correspondante prévue à l'extrémité correspondante de chaque rainure 51b. Chaque plot 53a présente, sur un côté, un ergot d'encliquetage 54a qui peut s'accrocher derrière une surface d'arrêt 54b prévue dans l'évidement 53b.

Chacun des deux demi-écrous 45a et 45b présente, sur sa surface externe, des filets de vis 55a et 55b qui, après assemblage des deux demi-écrous, forment un filetage mâle 55 pouvant être vissé dans un filetage femelle 56 (figures 2 et 6) qui est formé dans le corps cylindrique 1 à une extrémité de celui-ci, à distance de l'épaulement annulaire 22. Le filetage femelle 56 est constitué par des filets de vis 56a et 56b formés respectivement dans les demi-coquilles 1a et 1b, comme montré dans les figures 4 et 5.

A leur extrémité externe, c'est-à-dire celle qui est la plus éloignée de la bague fendue 44, les deux demi-écrous 45a et 45b sont pourvus respectivement de collets 57a et 57b, à trois pans chacun, qui forment ensemble un collet à contour hexagonal auquel peut être adaptée une clé appropriée pour le vissage ou le dévissage du manchon-écrou 45 dans le corps cylindrique 1. Ainsi, en vissant le manchon-écrou 45 dans le corps cylindrique 1, ledit manchon-écrou pousse axialement la bague fendue 44 qui agit à son tour, par sa surface conique 49, sur les extrémités libres des doigts flexibles 33 afin de les obliger à se rétracter ou contracter radialement pour presser la garniture d'étanchéité 2 autour du câble, canalisation, faisceau de câbles ou de canalisations sur lequel le dispositif d'étanchéité est installé.

De préférence, le manchon-écrou 45 comporte, sur sa surface périphérique, une marque 58 destinée à indiquer un serrage insuffisant du manchon-écrou 45 lorsque celui-ci est vissé dans le filetage femelle 56 du corps cylindrique 1 et que la marque 58 est encore visible. Cette marque 58 peut être constituée par exemple par un anneau coloré qui a une couleur différente de celle du restant du manchon-écrou 45. La marque 58 peut être faite à l'aide d'une peinture ayant une couleur appropriée, de préférence rouge afin d'attirer l'attention de l'utilisateur sur le danger potentiel d'une insuffisance de serrage du manchon-écrou 45.

Afin d'empêcher que le manchon-écrou 45 ne puisse se dévisser de manière intempestive après qu'il a atteint un degré de vissage prédéfini dans le filetage femelle 56 du corps cylindrique 1, le manchon-écrou 45 comporte au moins une protubérance 59 qui, après franchissement d'une protubérance 61 du corps cylindrique 1, s'engage dans un évidement 62 dudit corps cylindrique. Comme montré dans la figure 12, la protubérance 59 peut être formée par exemple sur le demi-écrou 45b, dans la région de la marque annulaire 58 de celui-ci. Dans ce cas, la protubérance 61 et l'évidement 62 peuvent être formés sur le premier filet de vis du filetage femelle 56 du corps cylindrique 1, par exemple sur la coquille la comme montré dans la figure 4.

Le dispositif d'étanchéité qui a été décrit ci-dessus convient bien pour être installé sur un câble ou une canalisation rigide unique ayant un diamètre extérieur correspondant au diamètre intérieur de la garniture d'étanchéité 2. Toutefois, dans le cas où le dispositif d'étanchéité doit être installé sur un câble ou une canalisation unique d'un diamètre extérieur sensiblement plus petit que le diamètre intérieur de la garniture d'étanchéité 2, ou doit être installé sur un faisceau de câbles ou de canalisations, il faudra en général prévoir des garnitures additionnelles d'étanchéité. Dans le cas d'un câble ou canalisation unique de petit diamètre, il suffira en général d'enrouler sur le câble ou canalisation, à l'endroit de celui-ci où doit être installé le dispositif d'étanchéité, un ruban en une matière élastomère capable de fluer, en effectuant avec le ruban un nombre de tours suffisant pour atteindre un diamètre à peu près égal au le diamètre intérieur de la garniture d'étanchéité 2. Après que le dispositif de serrage radial 3, équipé de la garniture d'étanchéité 2 a été placé autour du câble ou canalisation préalablement équipé dudit ruban, et après que les deux demi-coquilles 1a et 1b ont été placées autour du dispositif de serrage radial 3, en les assemblant et fixant l'une à l'autre au moyen des ensembles boulon 5 et écrou 6, le ruban précité subit alors déjà une première compression s'il avait été enroulé jusqu'à atteindre un diamètre extérieur légèrement plus grand que le diamètre intérieur de la garniture d'étanchéité 2. Ensuite, après que la bague fendue 44 a été placée autour du câble ou canalisation et engagée dans le corps cylindrique 1, que les deux demi-écrous 45a et 45b ont été eux aussi placés autour du câble ou canalisation et fixés l'un à l'autre comme décrit plus haut, et après que le manchon-écrou 45 a été complètement vissé dans le filetage femelle 56 du corps cylindrique 1, la garniture d'étanchéité 2 et le ruban précité sont fortement comprimés tout autour du câble ou canalisation afin d'assurer à la fois l'étanchéité désirée et une immobilisation du câble ou canalisation dans le corps cylindrique 1. Le vissage du manchon-écrou 45 peut être effectué avant ou après que la bride de fixation 15 a été fixée à la cloison dans le trou de laquelle passe le câble ou canalisation.

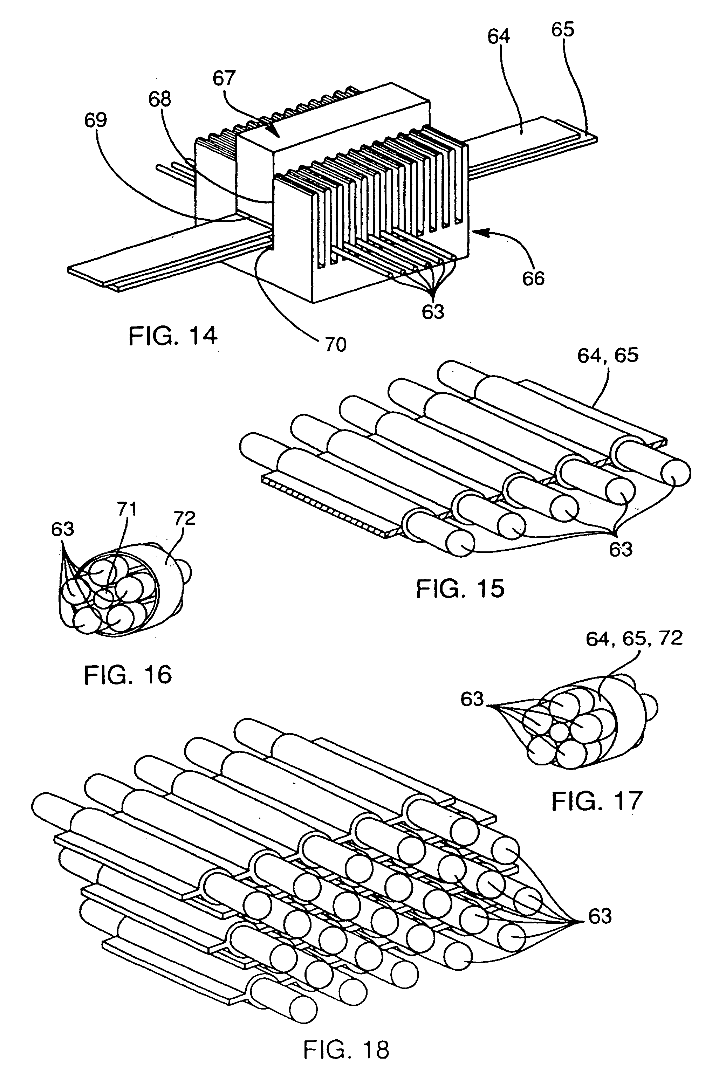

Dans le cas où le dispositif d'étanchéité doit être installé sur un faisceau de câbles 63, par exemple des câbles électriques, on peut prévoir à titre de garniture additionnelle d'étanchéité, en plus de la garniture d'étanchéité 2, au moins une paire de rubans 64 et 65 en matière élastomère (figures 14 et 15). Les deux rubans 64 et 65 peuvent être placés en sandwich et pressés de chaque côté d'une nappe composée d'au moins une partie des câbles 63 formant le faisceau de câbles, à l'aide du dispositif représenté dans la figure 14. Ce dispositif comprend essentiellement une matrice 66, qui a en gros la forme d'un peigne à larges dents, et un pressoir 67. La matrice 66 comporte un nombre de dents, donc un nombre d'espaces inter-dentaires au moins égal au nombre des câbles 63 composant la nappe de câbles qui doit être prise en sandwich entre les deux rubans 64 et 65 en matière élastomère. Etant donné que les câbles 63 peuvent avoir des diamètres différents, les espaces inter-dentaires ont une largeur un peu plus grande que le plus grand diamètre de câble prévu. Chaque dent de la matrice 66 présente, sensiblement en son milieu, une large encoche 68 dont la profondeur est égale à celle des espaces inter-dentaires de la matrice 66 en forme de peigne. Les encoches 68 sont alignées et ont une largeur qui correspond à celle des rubans 64 et 65 et à celle du pressoir 67, cette largeur pouvant être elle-même sensiblement égale à la longueur axiale du dispositif de serrage radial 3 et de la garniture d'étanchéité 2. La surface inférieure du pressoir 67 et le fond des encoches 68 et des espaces inter-dentaires sont respectivement pourvus de couches 69 et 70 de matière élastomère ayant une épaisseur au moins égale à la moitié du diamètre des câbles 63. Ainsi, en plaçant tout d'abord le ruban 65 sur la couche 70 au fond des encoches 68, puis les câbles 63 dans des espaces inter-dentaires contigus de la matrice 66 en forme de peigne, puis le ruban 64 dans les encoches 68, transversalement par-dessus les câbles 63, et enfin en pressant le sandwich ainsi obtenu à l'aide du pressoir 67, on obtient finalement la structure en nappe représentée sur la figure 15. Dans la figure 14, on a représenté une nappe de six câbles 63 (la figure 15 ne montre que cinq câbles 63 dans la mesure où la nappe a été coupée), mais il va de soi que le dispositif montré dans la figure 14 permet de former des nappes de câbles 63 comportant un nombre plus petit ou plus grand que cinq ou six, le nombre maximum de câbles dépendant uniquement du nombre total d'espaces inter-dentaires de la matrice 66 en forme de peigne. En outre, dans les figures 14 et 15, on a représenté seulement des tronçons des câbles 63, mais il est bien entendu que ceux-ci ont dans la pratique des longueurs beaucoup plus grandes de chaque côté des rubans 64 et 65.

La nappe représentée sur la figure 15 doit être ensuite roulée autour d'une âme centrale appropriée 71, comme montré dans la figure 16 (l'âme 71 peut être éventuellement l'un des câbles 63 de la nappe, auquel cas la nappe est roulée sur elle-même). Sur le rouleau ainsi obtenu, un ruban 72 en matière élastomère est enroulé en au moins une couche comme montré également sur la figure 16, jusqu'à obtention d'un diamètre au moins égal et de préférence légèrement plus grand que le diamètre intérieur de la garniture d'étanchéité 2. Le ruban 72 peut être constitué par une certaine longueur de l'un ou l'autre des deux rubans 64 et 65 ou des deux, qui n'a pas été détaché de la nappe représentée dans la figure 15 et prolonge celle-ci. Toutefois, le ruban 72 peut être aussi constitué par un morceau de ruban différent des rubans 64 et 65 de la nappe, mais ayant de préférence la même largeur et fabriqué dans la même matière que les rubans 64 et 65.

Le dispositif d'étanchéité selon l'invention peut être installé sur le faisceau de câbles 63 ainsi préparé (figure 16) d'une manière semblable à celle décrite plus haut à propos d'un câble ou canalisation unique. Lorsque le manchon-écrou 45 est vissé à fond, le dispositif de serrage radial 3 comprime les diverses couches de matières élastomères formées par la garniture d'étanchéité 2, les rubans 64, 65 et 72, de telle façon que la matière élastomère flue et comble les espaces vides qui pouvaient exister autour du faisceau de câbles et entre les câbles 63 dudit faisceau, en donnant un ensemble compact et étanche comme celui montré dans la fïgure 17.

Dans le cas où le faisceau de câbles comporte un grand nombre de câbles 63, par exemple 25 câbles comme montré dans la figure 18, ou un nombre encore plus grand de câbles, il ne devient pratiquement plus possible de réaliser une nappe comportant un aussi grand nombre de câbles à l'aide d'un appareil semblable à celui de la figure 14 et d'enrouler une telle nappe sur elle-même, si l'on considère qu'au moment où cette nappe doit être formée, le faisceau de câbles a déjà été passé à travers le trou de la cloison et ne peut en général plus en être sorti. Dans ce cas, une solution peut consister à superposer plusieurs nappes de câbles semblables à celle montrée dans la figure 15, de façon à obtenir un empilage de nappes semblable à celui qui est montré dans la figure 18. De préférence, on empile un nombre de nappes tel que l'on obtienne, vu en coupe par un plan perpendiculaire à l'axe longitudinal des câbles 63, un empilage ayant un contour s'inscrivant dans un carré ou dans un polygone régulier (dans ce dernier cas, les nappes peuvent comporter des nombres différents de câbles 63). Ensuite, un ruban en matière élastomère peut être placé autour de l'empilage d'une manière semblable à celle décrite à propos de la figure 16.

On notera que le dispositif d'étanchéité selon l'invention qui a été décrit ci-dessus est réparable si l'on constate un défaut d'étanchéité. En effet, dans ce cas, il suffit de dévisser le manchon-écrou 45, de dévisser les boulons 5 pour pouvoir écarter les deux demi-coquilles 1a et 1b et faire glisser la bague fendue 44 et le manchon-écrou 45 le long du faisceau de câbles, puis d'enlever le dispositif de serrage radial 3 avec sa garniture d'étanchéité 2 pour pouvoir inspecter cette dernière et éventuellement la remplacer en cas de défaut. Dans le cas d'un faisceau de câbles préparé comme montré sur la figure 16 ou 18, s'il n'y a pas d'espace vide entre les câbles du faisceau, on peut se contenter de rajouter un ou plusieurs tours supplémentaires de ruban 72 autour du faisceau avant de réinstaller le dispositif d'étanchéité autour du faisceau de câbles. Par contre, si on constate la présence d'espaces vides entre les câbles du faisceau, dans le cas d'une nappe unique, celle-ci peut être déroulée et reformée en plaçant sur elle des épaisseurs supplémentaires de rubans en matière élastomère. Dans le cas de nappes multiples superposées, les nappes peuvent être séparées et reformées individuellement comme indiqué ci-dessus à propos d'une nappe unique, ou des rubans supplémentaires en matière élastomère peuvent être intercalés entre les différentes nappes, afin d'augmenter la quantité de matière élastomère se trouvant entre les câbles 63 et disponibles pour combler les espaces vides entre ceux-ci lorsque l'ensemble des nappes est comprimé par le dispositif de serrage radial 3.

Suivant une autre caractéristique du dispositif d'étanchéité selon l'invention, celui-ci est conçu de telle façon que des câbles supplémentaires peuvent être passés à travers le trou de la cloison après que le dispositif d'étanchéité a été installé sur un faisceau de câbles et fixé à ladite cloison. A cet effet, au moins l'une des deux demi-coquilles 1a et 1b du corps cylindrique 1 comporte, dans l'épaisseur de sa paroi, au moins un canal longitudinal, par exemple six canaux 73, comme montré dans la figure 3. Une des extrémités des canaux 73 débouche à l'extérieur du corps cylindrique 1 du côté de son extrémité filetée, c'est-à-dire du côté du manchon-écrou 45, à travers une ouverture 74 de forme arquée (figures 4 et 6). Cette ouverture 74 peut être obturée de manière étanche par un passe-câbles 75 (figures 1, 2 et 8) comportant plusieurs passages 76 qui sont dimensionnés de préférence pour des câbles de différents diamètres et qui sont par exemple répartis en six groupes correspondant respectivement aux six canaux 73, comme cela est plus particulièrement visible dans la figure 8. Le passe-câbles 75 est retenu à l'intérieur de l'ouverture 74 du corps cylindrique 1 par plusieurs nervures 77, par exemple six nervures 77 qui sont formées d'une seule pièce avec le passe-câbles. Les trois nervures extérieures 77 sont respectivement engagées dans des lumières oblongues 78 (figures 1, 2 et 6) tandis que les trois nervures internes 77 sont respectivement engagées dans des rainures qui sont formées dans le corps cylindrique et dont une seule est visible dans la figure 2, mais non repérée par un numéro de référence.

L'autre extrémité des canaux 73 débouche dans l'espace interne du corps cylindrique 1, qui est situé au delà de l'épaulement annulaire 22, les canaux 73 s'ouvrant à la base dudit épaulement annulaire comme montré dans la figure 2.

Dans le cas où tous les canaux 73 sont situés dans l'une des deux demi-coquilles du corps cylindrique 1, par exemple la demi-coquille la comme montré, il est possible de donner à cette demi-coquille la une épaisseur de paroi suffisante pour y former les canaux 73, en réalisant les deux demi-coquilles 1a et 1b de telle façon que le volume cylindrique intérieur du corps cylindrique 1 soit désaxé par rapport à la surface cylindrique externe dudit corps cylindrique 1.

Dans le cas où le faisceau de câbles est entouré d'une gaine métallique tressée de blindage, la gaine doit bien entendu être découpée tout autour du faisceau de câbles et les deux parties résultantes de la gaine doivent être écartées l'une de l'autre et retroussées le long du faisceau de câbles, pour que celui-ci puisse être préparé comme décrit plus haut à propos des figures 14 à 17 ou 18. Dans ce cas, après la mise en place du dispositif d'étanchéité autour du faisceau de câbles, la continuité de la gaine de blindage doit être rétablie. Dans ce cas, on doit utiliser un dispositif d'étanchéité dont le corps cylindrique est au moins superficiellement conducteur de l'électricité, et des gorges 79 et 81 sont prévues aux extrémités dudit corps cylindrique 1. Dans ces conditions, les extrémités coupées de la gaine de blindage peuvent être enfilées par dessus les extrémités du corps cylindrique 1 au moins sur une distance correspondant à la largeur des gorges circulaires 79 et 81. Les extrémités de la gaine peuvent être ensuite fixées au corps cylindrique 1 par des colliers de serrage du type "Serreflex", "Band-it", "Tie-rap" ou autres, qui pressent les extrémités de la gaine respectivement dans les gorges circulaires 79 et 81.

Il est bien entendu que le mode de réalisation de l'invention qui a été décrit ci-dessus a été donné à titre d'exemple purement indicatif et nullement limitatif, et que de nombreuses modifications peuvent être apportées par l'homme de l'art sans pour autant sortir du cadre de l'invention. C'est ainsi notamment que la bague 44 et le manchon-écrou 45 pourraient être formés d'un seul tenant. Plus précisément, chaque demi-écrou 45a, 45b peut être prolongé et comporter un chanfrein conique à son extrémité adjacente au dispositif de serrage radial 3. Toutefois, cette solution est moins bonne que celle décrite précédemment dans la mesure où le manchon-écrou 45, en tournant, pourrait, par frottement, soumettre les doigts 33 du dispositif de serrage radial 3 à un effort tangentiel tendant à les déformer aussi dans le sens circonférentiel.

En outre, dans l'exemple de réalisation décrit, le manchon-écrou 45 est pourvu d'un filetage mâle 55 se vissant dans un filetage femelle 56 du corps cylindrique 1. Dans un autre mode de réalisation, dans lequel les deux demi-coquilles formant le corps cylindrique 1 ont une épaisseur de paroi constante avec des surfaces cylindriques interne et externe concentriques, le corps cylindrique pourrait être pourvu d'un filetage sur sa surface cylindrique externe et l'écrou pourrait être réalisé sous la forme d'un écrou chapeau muni d'un filetage interne pouvant se visser sur le filetage externe du corps cylindrique. Dans ce cas, la bague 44 pourrait avoir une plus grande longueur axiale, de façon à faire saillie au-delà de l'extrémité du corps cylindrique 1, de telle sorte que, lorsque l'écrou chapeau est vissé sur le corps cylindrique, il pousse axialement la bague 44 pour qu'elle agisse sur les doigts 33 du dispositif de serrage radial 3.

## Revendications

1. Dispositif d'étanchéité pour établir une étanchéité entre une cloison et au moins un câble ou canalisation (63) passant au travers d'un trou de ladite cloison, ledit dispositif d'étanchéité comprenant deux demi-coquilles (1a, 1b) aptes à être placées sur le câble ou canalisation et assemblées l'une à l'autre pour former ensemble un corps cylindrique (1) qui entoure complètement ledit câble ou canalisation et peut être fixé à ladite cloison en correspondance avec le trou de celle-ci, un joint d'étanchéité (17) destiné à être placé entre ledit corps cylindrique et ladite cloison, et des moyens de scellement pour remplir le vide entre ledit câble ou canalisation et ledit corps cylindrique et pour immobiliser ceux-ci l'un par rapport à l'autre, **caractérisé en ce que** lesdits moyens de scellement comprennent :
a) au moins une garniture d'étanchéité (2, 64, 65, 72) en une matière élastomère capable de fluer, et destinée à être placée autour dudit câble ou canalisation ;
b) un dispositif de serrage radial (3), sous la forme d'un anneau fendu (31) élastiquement déformable, qui est dimensionné pour pouvoir étre adapté autour de ladite garniture d'étanchéité (2) et engagé dans ledit corps cylindrique (1), et qui comporte une jupe (32) structurée ou configurée pour être rétractable radialement de façon au moins sensiblement uniforme sur toute sa circonférence sous l'action d'une force axiale de serrage ; et
c) un dispositif de serrage axial (4) qui interagit avec ledit corps cylindrique (1) et ladite jupe (32) pour obliger celle-ci à se rétracter afin de comprimer et faire fluer ladite garniture d'étanchéité (2) pour combler ledit vide entre câble ou canalisation et corps cylindrique.

2. Dispositif d'étanchéité selon la revendication 1, **caractérisé en ce que** ladite jupe (32) radialement rétractable du dispositif de serrage radial (3) est définie par une série circulaire de doigts flexibles (33), qui sont formés d'un seul tenant avec ledit anneau fendu (31) et s'étendent à partir d'une face de celui-ci dans une direction sensiblement parallèle à l'axe dudit anneau fendu.

3. Dispositif d'étanchéité selon la revendication 2, **caractérisé en ce que** lesdits doigts flexibles (33) ont leurs faces latérales, deux à deux mutuellement en regard, qui sont inclinées de façon à se chevaucher dans le sens circonférentiel de l'anneau fendu (31).

4. Dispositif d'étanchéité selon la revendication 2 ou 3, **caractérisé en ce que** ledit corps cylindrique (1) est pourvu d'un filetage (56) à une de ses extrémités et, dans une région située à distance dudit filetage, d'un épaulement annulaire interne (22) servant d'appui axial pour l'anneau fendu (31) dudit dispositif de serrage radial (3).

5. Dispositif d'étanchéité selon la revendication 4, **caractérisé en ce que** ledit dispositif de serrage axial (4) comporte au moins deux pièces (44, 45) assemblables entre elles, qui définissent, après leur assemblage une surface conique (49) et un élément fileté (45, 55) apte à coopérer avec le filetage (56) dudit corps cylindrique (1) pour presser axialement ladite surface conique (49) contre les extrémités libres des doigts flexibles (33) dudit dispositif de serrage radial (3), afin d'obliger lesdites extrémités libres des doigts flexibles à se rétracter radialement.

6. Dispositif d'étanchéité selon la revendication 5, **caractérisé en ce que** le filetage (56) dudit corps cylindrique (1) est un filetage femelle et **en ce que** ledit dispositif de serrage axial (4) comporte trois pièces, à savoir une bague fendue (44) en une matière élastiquement déformable, qui peut glisser axialement dans ledit corps cylindrique (1) et dont le trou central présente, en tant que surface conique (49), un chanfrein conique tourné vers les doigts flexibles (33) dudit dispositif de serrage radial (3), et deux demi-écrous (45a, 45b) assemblables l'un à l'autre pour former ensemble un manchon -écrou (45) fileté extérieurement, qui entoure ledit câble ou canalisation, est vissé dans le filetage femelle (56) dudit corps cylindrique (1) et pousse axialement ladite bague fendue (44) et son chanfrein conique contre les extrémités libres des doigts flexibles (33) dudit dispositif de serrage radial (3) pour les obliger à se rétracter radialement.

7. Dispositif d'étanchéité selon la revendication 6, **caractérisé en ce que** ladite bague fendue (44) comporte, dans sa région diamétralement opposée à sa fente (46), une rainure (47) qui est parallèle à ladite fente et qui définit dans ladite région une zone (48) de moindre épaisseur de paroi facilitant une déformation élastique de ladite bague fendue pour sa mise en place autour dudit câble ou canalisation.

8. Dispositif d'étanchéité selon la revendication 6 ou 7, **caractérisé en ce que** les deux demi-écrous (45a, 45b) s'assemblent l'un à l'autre par des surfaces mutuellement en contact, qui présentent respectivement des éléments mâles et femelles de positionnement (51a, 53a, 51b, 53b) emboîtables les uns dans les autres et des moyens de retenue par clipsage (52a, 54a, 54b).

9. Dispositif d'étanchéité selon l'une quelconque des revendications 6 à 8, **caractérisé en ce que** ledit manchon-écrou (45) comporte sur sa surface périphérique une marque (58) qui est indicative d'un serrage insuffisant dudit manchon-écrou lorsque celui-ci est vissé dans le filetage femelle (56) dudit corps cylindrique (1) et que ladite marque est encore visible.

10. Dispositif d'étanchéité selon la revendication 9, **caractérisé en ce que** ladite marque (58) est constituée par un anneau coloré qui a une couleur différente de celle du restant du manchon-écrou (45).

11. Dispositif d'étanchéité selon l'une quelconque des revendications 6 à 10, **caractérisé en ce que** ledit manchon-écrou (45) et ledit corps cylindrique (1) comprennent, à titre de moyens anti-dévissage, au moins une protubérance (59) et au moins un évidement (61) qui s'engagent l'un dans l'autre lorsque ledit manchon-écrou a atteint un degré de vissage prédéfini.

12. Dispositif d'étanchéité selon l'une quelconque des revendications 1 à 11, **caractérisé en ce que** ledit corps cylindrique (1) et ledit anneau fendu (31) du dispositif de serrage radial (3) comportent au moins une protubérance (35a, 35b) et au moins un évidement (36) s'engageant l'un dans l'autre à titre de dispositif anti-rotation.

13. Dispositif d'étanchéité selon l'une quelconque des revendications 1 à 12, **caractérisé en ce que** les deux demi-coquilles (1a, 1b) formant ledit corps cylindrique (1) s'assemblent l'une à l'autre par des surfaces mutuellement en contact qui présentent des éléments mâles et femelles de positionnement (8a, 9a, 8b, 9b), et sont maintenues assemblées l'une à l'autre par des ensembles boulon-écrou (5, 6).

14. Dispositif d'étanchéité selon la revendication 13, **caractérisé en ce que** les boulons (5) et les écrous (6) desdits ensembles boulon-écrou sont logés dans des évidements respectifs (13b, 11a) ménagés dans les deux demi-coquilles (1a, 1b) et y sont maintenus par des éléments de retenue (14b, 12a) qui sont formés dans lesdits évidements, d'un seul tenant avec les demi-coquilles.

15. Dispositif d'étanchéité selon l'une quelconque des revendications 4 à 14, **caractérisé en ce qu'**il comprend, en tant que ladite garniture d'étanchéité (2), un manchon (37) en matière élastomère qui est fendu longitudinalement et qui garnit la surface intérieure de l'anneau fendu (31) dudit dispositif de serrage radial (3), y compris ses doigts flexibles (33), ledit manchon en élastomère comportant, à une de ses extrémités, une collerette (38) qui recouvre la face dudit anneau fendu (31) orientée vers l'épaulement annulaire interne (22) dudit corps cylindrique (1) et une partie adjacente de la surface périphérique externe dudit anneau fendu.

16. Dispositif d'étanchéité selon la revendication 15, pour un faisceau de câbles (63), **caractérisé en ce qu'**il comprend en outre, en tant que ladite garniture d'étanchéité, en plus dudit manchon (37) en matière élastomère, au moins une paire de rubans (64, 65) en matière élastomère qui sont placés en sandwich et pressés de chaque côté d'une nappe composée d'au moins une partie desdits câbles (63) formant ledit faisceau.

17. Dispositif d'étanchéité selon la revendication 16, **caractérisé en ce que**, dans le cas d'une nappe unique formée de tous les câbles (63) dudit faisceau, le sandwich composé de ladite nappe et des deux rubans (64, 65) en matière élastomère est enroulé sur lui-même de manière à former un rouleau dont l'axe est parallèle à l'axe longitudinal des câbles (63), et **en ce qu'**un ruban additionnel (72) en matière élastomère est enroulé sur au moins un tour autour dudit rouleau.

18. Dispositif d'étanchéité selon la revendication 16, **caractérisé en ce que**, dans le cas de plusieurs nappes formées chacune d'un certain nombre de câbles (63) du faisceau et prises chacune en sandwich entre une paire respective de rubans (64, 65) en matière élastomère, lesdites nappes garnies de leurs rubans en matière élastomère sont superposées les unes aux autres, et **en ce qu'**un ruban additionnel en matière élastomère est enroule sur au moins un tour autour de l'ensemble formé par les nappes superposées.

19. Dispositif d'étanchéité selon l'une quelconque des revendications 1 à 18, **caractérisé en ce que** chacune des deux demi-coquilles (1a, 1b) formant ledit corps cylindrique (1) est pourvue d'une demi-bride (15a ou 15b) qui, après assemblage des deux demi-coquilles, forme avec la demi-bride (15b ou 15a) de l'autre demi-coquille une bride (15) pour la fixation dudit corps cylindrique (1) à ladite cloison.

20. Dispositif d'étanchéité selon la revendication 19, rattachée à la revendication 4, **caractérisé en ce que** les deux demi-brides (15a, 15b) et l'épaulement annulaire (22) dudit corps cylindrique (1) sont coplanaires.

21. Dispositif d'étanchéité selon la revendication 20, **caractérisé en ce que** ledit joint d'étanchéité (17) est constitué par deux demi-joints (17a, 17b) en matière élastomère associés chacun à la demi-bride (15a, 15b) d'une demi-coquille correspondante (1a, 1b), chaque demi-joint comprenant une partie sensiblement plane (19), en forme d'arche, qui est destinée à être appliquée contre la face, coté cloison, de la demi-bride (15a, 15b) de la demi-coquille correspondante, et deux parties (21) situées respectivement aux pieds de la partie (19) en forme d'arche et destinées à être intercalées entre les deux demi-brides (15a, 15b) et entre des parties correspondantes (22a, 22b) des demi-coquilles (1a, 1b) formant ensemble ledit épaulement annulaire (22) du corps cylindrique (1).

22. Dispositif d'étanchéité selon la revendication 21, **caractérisé en ce que** la partie sensiblement plane (19) de chaque demi-joint (17a, 17b) est fixée à la demi-bride (15a, 15b) de la demi-coquille correspondante (1a, 1b) par boutonnage (23, 24).

23. Dispositif d'étanchéité selon l'une quelconque des revendications 4 à 22, **caractérisé en ce qu'**au moins l'une des deux demi-coquilles (1a, 1b) dudit corps cylindrique (1) comporte, dans l'épaisseur de sa paroi, au moins un canal longitudinal (73), dont une des extrémités débouche à l'extérieur dudit corps cylindrique (1) du côté de son extrémité filetée et est obturée de façon étanche par un passe-câbles (75) en matière élastomère, et dont l'autre extrémité débouche dans l'espace interne dudit corps cylindrique (1) au-delà de son épaulement annulaire (22).

24. Dispositif d'étanchéité selon l'une quelconque des revendications 1 à 23, **caractérisé en ce que** ledit corps (1) est, au moins superficiellement, conducteur de l'électricité et présente, à chacune de ses extrémités, une gorge circulaire (79, 81) pour la fixation d'une extrémité d'une tresse métallique de blindage de câble ou de faisceau de câbles à l'aide d'un collier de serrage.

## Patentansprüche

1. Abdichtungsvorrichtung zum Abdichten zwischen einer Trennwand und mindestens einem Kabel oder Leitungsrohr (63), das ein Loch in der Trennwand durchsetzt, wobei diese Abdichtungsvorrichtung zwei Halbschalen (1a, 1b) umfasst, die dazu geeignet sind, an dem Kabel oder Leitungsrohr angeordnet und miteinander verbunden zu werden, um einen zylindrischen Körper (1) zu bilden, der das Kabel oder Leitungsrohr vollständig umgibt und an der Trennwand korrespondierend mit deren Loch befestigt werden kann, eine Dichtung (17), die dazu bestimmt ist, zwischen dem zylindrischen Körper und der Trennwand angeordnet zu werden, und Versiegelungsmittel, um den Hohlraum zwischen dem Kabel oder Leitungsrohr und dem zylindrischen Körper auszufüllen und diese gegen Bewegung relativ zueinander festzulegen, **dadurch gekennzeichnet, dass** die Versiegelungsmittel umfassen:
a) mindestens eine Dichtung (2, 64, 65, 72) aus fließfähigem Elastomermaterial, die dazu bestimmt ist, um das Kabel oder Leitungsrohr herum angeordnet zu werden;
b) eine Spannvorrichtung zum radialen Spannen (3) in Form eines elastisch. verformbaren, geschlitzten Ringes (31), der so dimensioniert ist, dass er um die Dichtung (2) herum angepasst werden kann und in dem zylindrischen Körper (1) angeordnet werden kann, und eine Schürze (32) aufweist, die derart strukturiert oder geformt ist, dass sie unter der Einwirkung einer axialen Spannkraft zumindest im wesentlichen gleichförmig an ihrem gesamten Umfang in radialer Richtung zusammenziehbar ist; und
c) eine Spannvorrichtung zum axialen Spannen (4), die mit dem zylindrischen Körper (1) und der Schürze (32) zusammenwirkt, um diese dazu zu bringen, sich zusammenzuziehen, damit sie die Dichtung (2) zusammendrückt und fließen lässt, um den Hohlraum zwischen dem Kabel oder der Leitung und dem zylindrischen Körper auszufüllen.

2. Abdichtungsvorrichtung entsprechend Anspruch 1, **dadurch gekennzeichnet, dass** die in radialer Richtung zusammenziehbare Schürze (32) der Spannvorrichtung zum radialen Spannen (3) von einer kreisförmigen Serie flexibler Finger (33) gebildet ist, die einstückig mit dem geschlitzten Ring (31) ausgebildet sind und sich ausgehend von einer Stirnfläche desselben in einer Richtung erstrecken, die zu der Achse des geschlitzten Ringes im wesentlichen parallel ist.

3. Abdichtungsvorrichtung entsprechend Anspruch 2, **dadurch gekennzeichnet, dass** die Seitenflächen der flexiblen Finger (33) jeweils paarweise einander gegenüberliegen und derart schräg geneigt sind, dass sie sich in der Umfangsrichtung des geschlitzten Rings (31) überlagern.

4. Abdichtungsvorrichtung entsprechend Anspruch 2 oder 3, **dadurch gekennzeichnet, dass** der zylindrische Körper (1) an einem seiner Enden mit einem Gewinde (56) versehen ist und in einem vom Gewinde beabstandeten Bereich einen ringförmigen inneren Absatz (22) aufweist, der als axiale Abstützung für den geschlitzten Ring (31) der Spannvorrichtung zum radialen Spannen (3) dient.

5. Abdichtungsvorrichtung entsprechend Anspruch 4, **dadurch gekennzeichnet, dass** die Spannvorrichtung zum axialen Spannen (4) mindestens zwei miteinander verbindbare Teile (44, 45) aufweist, die, nachdem sie miteinander verbunden sind, eine konische Fläche (49) und ein Gewindeelement (45, 55) bilden, das mit dem Gewinde (56) des zylindrischen Körpers (1) zusammenwirken kann, um die konische Fläche (49) in axialer Richtung gegen die freien Enden der flexiblen Finger (33) der Spannvorrichtung zum radialen Spannen (3) zu drücken, um zu bewirken, dass sich die freien Enden der flexiblen Finger in radialer Richtung zusammenziehen.

6. Abdichtungsvorrichtung entsprechend Anspruch 5, **dadurch gekennzeichnet, dass** das Gewinde (56) des zylindrischen Körpers (1) ein Innengewinde ist und dass die Spannvorrichtung zum axialen Spannen (4) drei Teile aufweist, nämlich einen geschlitzten Reif (44) aus einem elastisch verformbaren Material, der in axialer Richtung in dem zylindrischen Körper (1) gleiten kann und dessen mittiges Loch als konische Fläche (49) eine konische Abschrägung aufweist, die gegen die flexiblen Finger (33) der Spannvorrichtung zum radialen Spannen (3) gerichtet ist, und zwei miteinander verbindbare Halbmuttern (45a, 45b) aufweist, die zusammen eine Hülsen-Mutter (45) mit Außengewinde bilden, die das Kabel oder die Leitung umgibt, im Innengewinde (56) des zylindrischen Körpers (1) verschraubt ist und den geschlitzten Reif (44) und seine konische Abschrägung in axialer Richtung gegen die freien Enden der flexiblen Finger (33) der Spannvorrichtung zum radialen Spannen (3) drückt, um zu bewirken, dass sie sich in radialer Richtung zusammenziehen.

7. Abdichtungsvorrichtung entsprechend Anspruch 6, **dadurch gekennzeichnet, dass** der geschlitzte Reif (44) in seinem dem Schlitz (46) diametral gegenüberliegenden Bereich eine Nut (47) aufweist, die zu dem Schlitz parallel ist und in diesem Bereich eine Zone (48) mit geringerer Wanddicke ausbildet, um die elastische Verformung des geschlitzten Reifs für dessen Anordnung um das Kabel oder Leitungsrohr herum zu erleichtern.

8. Abdichtungsvorrichtung entsprechend Anspruch 6 oder 7, **dadurch gekennzeichnet, dass** die beiden Halbmuttem (45a, 45b) miteinander über Flächen verbunden werden, die miteinander in Kontakt sind und stecker- und buchsenförmige Positionierelemente aufweisen (51a, 53a, 51b, 53b), die in einander einsteckbar sind, und Mittel zum Halten mittels Aufklippsen (52a, 54a, 54b) aufweisen.

9. Abdichtungsvorrichtung entsprechend einem der Ansprüche 6 bis 8, **dadurch gekennzeichnet, dass** die Hülsen-Mutter (45) an ihrer Umfangsfläche eine Marke (58) aufweist, die ein unzureichendes Festspannen der Hülsen-Mutter beim Verschrauben im Innengewinde (56) des zylindrischen Körpers (1) anzeigt, und dass diese Marke noch sichtbar ist.

10. Abdichtungsvorrichtung entsprechend Anspruch 9, **dadurch gekennzeichnet, dass** die Marke (58) von einem farbigen Ring gebildet ist, dessen Farbe sich vom Rest der Hülsen-Mutter (45) unterscheidet.

11. Abdichtungsvorrichtung entsprechend einem der Ansprüche 6 bis 10, **dadurch gekennzeichnet, dass** die Hülsen-Mutter (45) und der zylindrische Körper (1) als Mittel zum Aufschraubschutz mindestens eine Ausstülpung (59) und mindestens eine Ausnehmung (61) aufweisen, die ineinander eingreifen, sobald die Hülsen-Mutter einen vorgegebenen Verschraubungsgrad erreicht hat.

12. Abdichtungsvorrichtung entsprechend einem der Ansprüche 1 bis 11, **dadurch gekennzeichnet, dass** der zylindrische Körper (1) und der geschlitzte Ring (31) der Spannvorrichtung zum radialen Spannen (3) mindestens eine Ausstülpung (35a, 35b) und mindestens eine Ausnehmung (36) aufweisen, die als Drehsicherungsvorrichtung ineinander eingreifen.

13. Abdichtungsvorrichtung entsprechend einem der Ansprüche 1 bis 12, **dadurch gekennzeichnet, dass** die beiden Halbschalen (1a, 1b), die den zylindrischen Körper (1) bilden, über Anlageflächen miteinander verbunden werden, die stecker und buchsenförmige Positionierelemente (8a, 9a, 8b, 9b) aufweisen, und durch Schrauben-Mutter-Sätze (5, 6) miteinander in Verbindung gehalten werden.

14. Abdichtungsvorrichtung entsprechend Anspruch 13, **dadurch gekennzeichnet, dass** die Schrauben (5) und die Muttern (6) dieser Schrauben-Mutter-Sätze in jeweiligen in den Halbschalen (1a, 1b) vorgesehenen Ausnehmungen (13b, 11a) angeordnet sind und dort über Haltemittel (14b, 12a) gehalten werden, die in den Ausnehmungen einstückig mit den Halbschalen ausgebildet sind.

15. Abdichtungsvorrichtung entsprechend einem der Ansprüche 4 bis 14, **dadurch gekennzeichnet, dass** sie als Dichtung (2) eine Hülse (37) aus Elastomermaterial aufweist, die in Längsrichtung geschlitzt ist und die Innenfläche des geschlitzten Rings (31) der Spannvorrichtung zum radialen Spannen (3) einschließlich ihrer flexiblen Finger (33) ausgekleidet ist, wobei die Hülse aus Elastomer an einem ihrer Enden einen Kragen (38) aufweist, der die Stirnfläche des geschlitzten Rings (31), die gegen den ringförmigen inneren Absatz (22) des zylindrischen Körpers (1) gerichtet ist, und einen angrenzenden Teil der Außenumfangsfläche des geschlitzten Rings überdacht.

16. Abdichtungsvorrichtung entsprechend Anspruch 15 für ein Kabelbündel (63), **dadurch gekennzeichnet, dass** sie ferner als Dichtung zusätzlich zu der Hülse (37) aus Elastomermaterial, mindestens ein Paar Streifen (64,65) aus Elastomermaterial aufweist, die beidseitig einer Matte angeordnet gegen sie angedrückt sind, die aus mindestens einem Teil der das Bündel bildenden Kabel (63) besteht.

17. Abdichtungsvorrichtung entsprechend Anspruch 16, **dadurch gekennzeichnet, dass** im Falle eines einzigen aus allen Kabeln (63) des Bündels gebildeten Matte der Verbund aus der Matte und den beiden Streifen (64, 65) aus Elastomermaterial aufgewickelt ist, derart, dass er eine Rolle bildet, deren Achse parallel zur Längsachse der Kabel (63) ist, und dass ein zusätzlicher Streifen (72) aus Elastomermaterial mindestens einmal um die Rolle herumgewickelt ist.

18. Abdichtungsvorrichtung entsprechend Anspruch 16, **dadurch gekennzeichnet, dass** im Falle mehrerer jeweils aus einer bestimmten Anzahl an Kabeln (63) des Bündels gebildeten Matten, die jeweils zwischen einem jeweiligen Paar aus Streifen (64, 65) aus Elastomermaterial eingeklemmt sind, die mit ihren Streifen aus Elastomermaterial versehenen Matten übereinanderliegen und dass ein zusätzlicher Streifen aus Elastomermaterial mindestens einmal um die aus den übereinanderliegenden Matten gebildete Gesamtheit gewickelt ist.

19. Abdichtungsvorrichtung entsprechend einem der Ansprüche 1 bis 18, **dadurch gekennzeichnet, dass** jede der beiden Halbschalen (1a, 1b), die den zylindrischen Körper (1) bilden, mit einem Halbflansch (15a bzw. 15b) versehen ist, der nach dem Verbinden der beiden Halbschalen mit dem Halbflansch (15b bzw. 15a) der anderen Halbschale einen Flansch (15) für die Befestigung des zylindrischen Körpers (1) an der Trennwand bildet.

20. Abdichtungsvorrichtung entsprechend Anspruch 19, verknüpft mit Anspruch 4, da durch gekennzeichnet, dass die beiden Halbflansche (15a, 15b) und der ringförmige Absatz (22) des zylindrischen Körpers (1) koplanar sind.

21. Abdichtungsvorrichtung entsprechend Anspruch 20, **dadurch gekennzeichnet, dass** die Dichtung (17) von zwei Halbdichtungen (17a, 17b) aus Elastomermaterial gebildet ist, die jeweils mit dem Halbflansch (15a, 15b) einer entsprechenden Halbschale (1a, 1b) verbunden sind, wobei jede Halbdichtung einen im wesentlichen ebenen Teil (19) in Form eines Bogens aufweist, der dazu bestimmt ist, sich gegen die trennwandseitige Fläche des Halbflansches (15a, 15b) der entsprechenden Halbschale anzulegen, und zwei Teile (21) aufweist, die jeweils am Fuß des einen Bogen bildenden Teils (19) angeordnet sind und dazu bestimmt sind, zwischen den beiden Halbflanschen (15a, 15b) und zwischen den entsprechenden Teilen (22a, 22b) der Halbschalen eingekeilt (1a, 1b) zu werden, die gemeinsam den ringförmigen Absatz (22) des zylindrischen Körpers (1) bilden.

22. Abdichtungsvorrichtung entsprechend Anspruch 21, **dadurch gekennzeichnet, dass** der im wesentlichen ebene Teil (19) jeder Halbdichtung (17a, 17b) am Halbflansch (15a, 15b) der entsprechenden Halbschale (1a, 1b) über eine Knopfverbindung (23, 24) befestigt ist.

23. Abdichtungsvorrichtung entsprechend einem der Ansprüche 4 bis 22, **dadurch gekennzeichnet, dass** mindestens eine der beiden Halbschalen (1a, 1b) des zylindrischen Körpers (1) in der Dicke ihrer Wand mindestens einen Längskanal (73) aufweist, dessen eines Ende an der Außenseite des zylindrischen Körpers (1) an der Seite seines Außengewindes ausmündet und über eine Kabeldurchführung (75) aus Elastomermaterial abgedichtet ist und dessen anderes Ende in dem Innenraum des zylindrischen Körpers (1) jenseits seines ringförmigen Absatzes (22) ausmündet.

24. Abdichtungsvorrichtung entsprechend einem der Ansprüche 1 bis 23, **dadurch gekennzeichnet, dass** der Körper (1) zumindest an der Oberfläche elektrisch leitfähig ist und an jedem seiner Enden eine Rundnut (79, 81) aufweist für die Befestigung eines Endes eines Metallgeflechts zur Abschirmung des Kabels oder des Kabelbündels mit Hilfe eines Spannrings.

## Claims

1. Sealing device for establishing a seal between a partition and at least one cable or duct (63) passing through a hole of said partition, said sealing device comprising two semi-shells (1a, 1b) which are able to be placed on the cable or duct and assembled one upon the other in order to form together a cylindrical body (1) which completely surrounds said cable or duct and can be fixed to said partition in communication with the hole of the latter, a sealing joint (17) which is intended to be placed between said cylindrical body and said partition, and sealing means for filling the space between said cable or duct and said cylindrical body and for immobilising the latter, one with respect to the other, **characterised in that** said sealing means comprise:
a) at least one seal (2, 64, 65, 72) made of an elastomeric material which is able to yield and is intended to be placed around said cable or duct;
b) a radial clamping device (3), in the form of an elastically deformable slit ring (31), which is dimensioned to be able to be adapted around said seal (2) and engaged in said cylindrical body (1), and which comprises a skirt (32) which is structured or configured to be radially retractable in at least a substantially uniform manner over all its circumference under the action of an axial clamping force; and
c) an axial clamping device (4) which interacts with said cylindrical body (1) and said skirt (32) in order to force the latter to retract so as to compress and make said seal (2) yield in order to fill up said space between cable or duct and cylindrical body.

2. Sealing device according to claim 1, **characterised in that** said radially retractable skirt (32) of the radial clamping device (3) is defined by a circular series of flexible fingers (33) which are formed all in one piece with said slit ring (31) and extend from a face of the latter in a direction substantially parallel to the axis of said slit ring.

3. Sealing device according to claim 2, **characterised in that** said flexible fingers (33) have their lateral faces, both mutually opposite each other, which are inclined so as to overlap in the circumferential direction of the slit ring (31).

4. Sealing device according to claim 2 or 3, **characterised in that** said cylindrical body (1) is provided with a thread (56) at one of its ends and, in a region situated at a distance from said thread, with an internal annular shoulder (22) serving as an axial support for the slit ring (31) of said radial clamping device (3).

5. Sealing device according to claim 4, **characterised in that** said axial clamping device (4) comprises at least two parts (44, 45) which can be assembled together and define, after their assembly, a conical surface (49) and a threaded element (45, 55) which is able to cooperate with the thread (56) of said cylindrical body (1) in order to press said conical surface (49) axially against the free ends of the flexible fingers (33) of said radial clamping device (3) in order to force said free ends of the flexible fingers to retract radially.

6. Sealing device according to claim 5, **characterised in that** the thread (56) of said cylindrical body (1) is a female thread and **in that** said axial clamping device (4) comprises three parts, i.e. a slit ring (44) made of an elastically deformable material, which can slide axially in said cylindrical body (1) and the central hole of which has, as a conical surface (49), a conical chamfer turned towards the flexible fingers (33) of said radial clamping device (3), and two semi-nuts (45a, 45b) which can be assembled one upon the other in order to form together a sleeve-nut (45) which is threaded on the exterior and surrounds said cable or duct, is screwed into the female thread (56) of said cylindrical body (1) and axially pushes said slit ring (44) and its conical chamfer against the free ends of the flexible fingers (33) of said radial clamping device (3) in order to force them to retract radially.

7. Sealing device according to claim 6, **characterised in that** said slit ring (44) comprises, in its region diametrically opposite its slit (46), a groove (47) which is parallel to said slit and which defines in said region a zone (48) of lesser wall thickness which facilitates an elastic deformation of said slit ring for its positioning around said cable or duct.

8. Sealing device according to claim 6 or 7, **characterised in that** the two semi-nuts (45a, 45b) are assembled one upon the other by surfaces which are mutually in contact and have respectively male and female positioning elements (51a, 53a, 51b, 53b) which can be fitted one into the other and means for retaining by clipping (52a, 54a, 54b).

9. Sealing device according to any of the claims 6 to 8, **characterised in that** said sleeve-nut (45) comprises on its peripheral surface a mark (58) which indicates inadequate clamping of said sleeve-nut when the latter is screwed into the female thread (56) of said cylindrical body (1) and when said mark is still visible.

10. Sealing device according to claim 9, **characterised in that** said mark (58) is formed by a coloured ring which has a different colour from that of the rest of the sleeve-nut (45).

11. Sealing device according to any of the claims 6 to 10, **characterised in that** said sleeve-nut (45) and said cylindrical body (1) comprise, by way of anti-unscrewing means, at least one protuberance (59) and at least one recess (61) which engage one in the other when said sleeve-nut has reached a predefined degree of screwing.

12. Sealing device according to any of the claims 1 to 11, **characterised in that** said cylindrical body (1) and said slit ring (31) of the radial clamping device (3) comprise at least one protuberance (35a, 35b) and at least one recess (36) which engage one in the other as anti-rotation device.

13. Sealing device according to any of the claims 1 to 12, **characterised in that** the two semi-shells (1a, 1b) forming said cylindrical body (1) are assembled one upon the other by surfaces which are mutually in contact and have male and female positioning elements (8a, 9a, 8b, 9b) and are kept assembled one upon the other by bolt-nut assemblies (5, 6).

14. Sealing device according to claim 13, **characterised in that** the bolts (5) and the nuts (6) of said bolt-nut assemblies are housed in respective recesses (13b, 11a) provided in the two semi-shells (1a, 1b) and are kept there by retaining elements (14b, 12a) which are formed in said recesses, all in one piece with the semi-shells.

15. Sealing device according to any of the claims 4 to 14, **characterised in that** it comprises, as said seal (2), a sleeve (37) made of elastomeric material which is slit longitudinally and which furnishes the interior surface of the slit ring (31) of said radial clamping device (3), including its flexible fingers (33), said sleeve made of elastomer comprising, at one of its ends, a collar (38) which covers the face of said slit ring (31), which face is orientated towards the internal annular shoulder (22) of said cylindrical body (1) and an adjacent portion of the peripheral external surface of said slit ring.

16. Sealing device according to claim 15, for a bundle of cables (63), **characterised in that** it comprises furthermore, as said seal, in addition to said sleeve (37) made of elastomeric material, at least one pair of strips (64, 65) made of elastomeric material which are placed as in a sandwich and pressed on each side of a sheet composed of at least one portion of said cables (63) forming said bundle.

17. Sealing device according to claim 16, **characterised in that**, in the case of a single sheet formed by all the cables (63) of said bundle, the sandwich composed of said sheet and two strips (64, 65) made of elastomeric material is rolled up upon itself so as to form a roll, the axis of which is parallel to the longitudinal axis of the cables (63), and **in that** an additional strip (72) made of elastomeric material is rolled up over at least one turn around said roll.

18. Sealing device according to claim 16, **characterised in that**, in the case of a plurality of sheets, each formed by a certain number of cables (63) of the bundle and each one sandwiched between a respective pair of strips (64, 65) made of elastomeric material, said sheets furnished with their strips made of elastomeric material are superimposed one upon the other, and **in that** an additional strip made of elastomeric material is rolled up over at least one turn around the assembly formed by the superimposed sheets.

19. Sealing device according to any of the claims 1 to 18, **characterised in that** each of the two semi-shells (1a, 1b) forming said cylindrical body (1) is provided with a semi-flange (15a or 15b) which, after assembling the two semi-shells, forms with the semi-flange (15b or 15a) of the other semi-shell, a flange (15) for fixing said cylindrical body (1) to said partition.

20. Sealing device according to claim 19, related to claim 4, characterised that the two semi-flanges (15a, 15b) and the annular shoulder (22) of said cylindrical body (1) are coplanar.

21. Sealing device according to claim 20, **characterised in that** said sealing joint (17) is formed by two semi-joints (17a, 17b) made of elastomeric material, each one being associated with the semi-flange (15a, 15b) of a corresponding semi-shell (1a, 1b), each semi-joint comprising a substantially planar portion (19), in the form of an arch, which is intended to be applied against the face, on the partition side, of the semi-flange (15a, 15b) of the corresponding semi-shell, and two portions (21) situated respectively at the feet of the portion (19) in the form of an arch and intended to be interposed between the two semi-flanges (15a, 15b) and between corresponding portions (22a, 22b) of the semi-shells (1a, 1b) forming together said annular shoulder (22) of the cylindrical body (1).

22. Sealing device according to claim 21, **characterised in that** the substantially planar portion (19) of each semi-joint (17a, 17b) is fixed to the semi-flange (15a, 15b) of the corresponding semi-shell (1a, 1b) by buttoning (23, 24).

23. Sealing device according to any of the claims 4 to 22, **characterised in that** at least one of the two semi-shells (1a, 1b) of said cylindrical body (1) comprises, in the thickness of its wall, at least one longitudinal channel (73), one of the ends of which opens to the exterior of said cylindrical body (1) on the side of its threaded end and is sealed in a sealed manner by a cable bushing (75) made of elastomeric material, and the other end of which opens into the internal space of said cylindrical body (1) beyond its annular shoulder (22).

24. Sealing device according to any of the claims 1 to 23, **characterised in that** said body (1) is, at least superficially, a conductor of electricity and has, at each of its ends, a circular groove (79, 81) for fixing one end of a metallic braiding for armouring the cable or bundle of cables by means of a clamping ring.
